Europäisches Patentamt

European Patent Office

Office européen des brevets

(11) Veröffentlichungsnummer: **0 269 813 B1**

# EUROPÄISCHE PATENTSCHRIFT

(45) Veröffentlichungstag der Patentschrift: **22.01.92**

(51) Int. Cl.⁵: **B01D 29/50**, B01D 29/62

(21) Anmeldenummer: **87114640.3**

(22) Anmeldetag: **07.10.87**

(54) **Vorrichtung zur Druckentwässerung von wässrigen Schlämmen.**

(30) Priorität: **02.12.86 DE 3641180**

(43) Veröffentlichungstag der Anmeldung:
**08.06.88 Patentblatt 88/23**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
DE-A- 3 240 326
FR-A- 2 234 913

CHEMISTRY AND INDUSTRY, Nr. 6, 16. März
1974, Seite VIII, Chemical and Industry Review, Chemical Society, Letchworth, Herts,
GB; ""Scraper ring" dry-cake filter discharges solids ready for use"

(73) Patentinhaber: **Müller Umwelttechnik GmbH &
Co. KG
Industriestrasse 3
W-4938 Schieder-Schwalenberg 2(DE)**

(72) Erfinder: **Müller, Wolfgang, Dipl.Ing.
Volkwinweg 6
W-4938 Schieder Schwalenberg 2(DE)**

(74) Vertreter: **Stracke, Alexander, Dipl.-Ing. et al
Jöllenbecker Strasse 164
W-4800 Bielefeld 1(DE)**

## Beschreibung

Die Erfindung bezieht sich auf eine Vorrichtung gemäß dem Oberbegriff des ersten Patentanspruches.

Es ist eine Vorrichtung dieser Art bekannt (FR-A-2 234 913), die je eine Kammer für die zu entwässernde Flüssigkeit und eine für das Filtrat aufweist und die über vertikal in der Kammer angeordnete Filterelemente, deren offene Enden in die Kammer für das Filtrat münden, verfügt. Bei der Entwässerung bildet sich auf den Filterelementen eine feste Schlammschicht vorbestimmbarer Stärke, die nach dem Auspressen der restlichen Flüssigkeit aus dem Filterraum durch eine Rakelplatte von den Filterelementen abgetrennt werden kann.

Eine weitere bekannte Vorrichtung (DE-A-32 40 326) in horizontaler Ausführung besitzt am Deckel oder am Entleerungskolben festgelegte und teleskopartig ausgebildete Filterkerzen. Die mit Durchströmöffnungen versehenen Teleskoprohre der Filterkerzen bilden eine Stützkonstruktion, über die ein Filtersack gestülpt wird.

Der Erfindung liegt die Aufgabe zugrunde, eine vorwiegend in horizontaler Anordnung ausgeführte Vorrichtung zur Druckentwässerung von wässrigen Schlämmen so zu gestalten, daß eine vollständige Trennung des nach der Druckentwässerung in der Aufnahmekammer vorhandenen und an den Filterelementen und der Innenfläche des Behälters fest anhaftenden Schlammkuchens erreicht und im Bodenbereich der Aufnahmekammer zwischen Behälterboden und unteren Filterkerzen sich ansammelndes Restwasser vermieden wird.

Die erfindungsgemäße Lösung dieser Aufgabe ergibt sich aus dem kennzeichnenden Teil des Hauptanspruches.

Nach der Druckentwässerung wird zur Entfernung des den Raum zwischen den einzelnen Filterkerzen ausfüllenden, stichfesten Schlammkuchens eine Relativbewegung zwischen der Abstreiferscheibe und den Filterkerzen vorgenommen, durch die der Schlammkuchen von den Filterkerzen getrennt wird.

Das Abstreifen des Schlammkuchens von den Filterkerzen wird vorzugsweise außerhalb der Aufnahmekammer vorgenommen. Es ist jedoch auch denkbar, nach der Druckentwässerung die Filterkerzen in der Aufnahmekammer zu belassen, den die Entleerungsöffnung verschließenden Deckel in die Offenstellung zu bringen und die Abstreiferscheibe über die gesamte Länge der Filterkerzen zu bewegen. Hierbei wird der Schlammkuchen aus der Aufnahmekammer ausgetragen.

Weitere Merkmale der Erfindung ergeben sich aus den Unteransprüchen und der folgenden Beschreibung vorteilhafter, beispielsweiser Ausführungsformen der Vorrichtung zur Druckentwässerung. Es zeigen:

| | |
|---|---|
| Fig. 1 | eine Vorrichtung zur Druckentwässerung im Vertikalschnitt, bei der die Aufnahmekammer für den Dünnschlamm in einem zylindrischen Behälter vorgesehen ist, |
| Fig. 2 | einen Schnitt nach der Linie II-II in Fig. 1, |
| Fig. 3 und 4 | verschiedene Betriebsstellungen der Vorrichtung nach den Fig. 1 und 2, |
| Fig. 5 | eine Teilansicht einer Ausführungsform im Vertikalschnitt, bei der als Antrieb der Abstreiferscheibe ein Hydraulikzylinder vorgesehen ist und |
| Fig. 6 | ein weiteres Ausführungsbeispiel ohne Entleerungskolben und |
| Fig. 7 und 8 | weitere Ausführungsformen. |

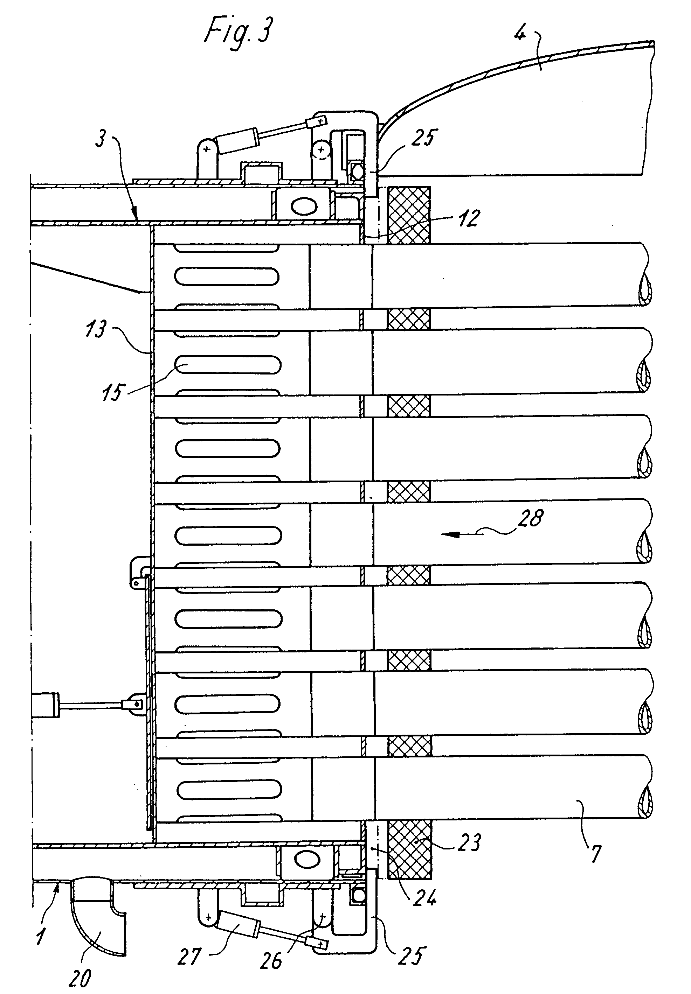

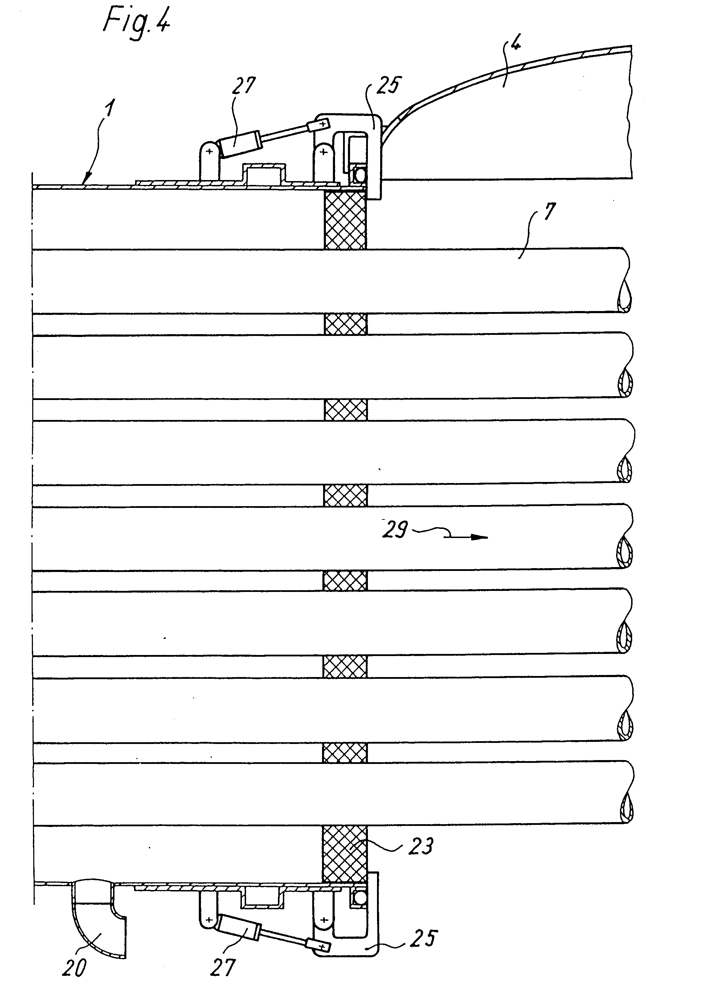

Die Vorrichtung weist einen zylindrischen Druckbehälter 1 auf, der mit einer Aufnahmekammer 2 für wässrige Schlämme versehen ist, die auf der einen Stirnseite durch einen Entleerungskolben 3 und auf der anderen Stirnseite durch einen Deckel 4 begrenzt wird. Dieser Deckel 4 ist um eine Horizontalachse 5 verschwenkbar am Druckbehälter 1 gelagert und kann in eine Öffnungsstellung bewegt werden, die in den Fig. 3 und 4 aufgezeigt ist. In dieser Öffnungsstellung gibt der Deckel 4 die Entleerungsöffnung 6 des Aufnahmebehälters 2 frei.

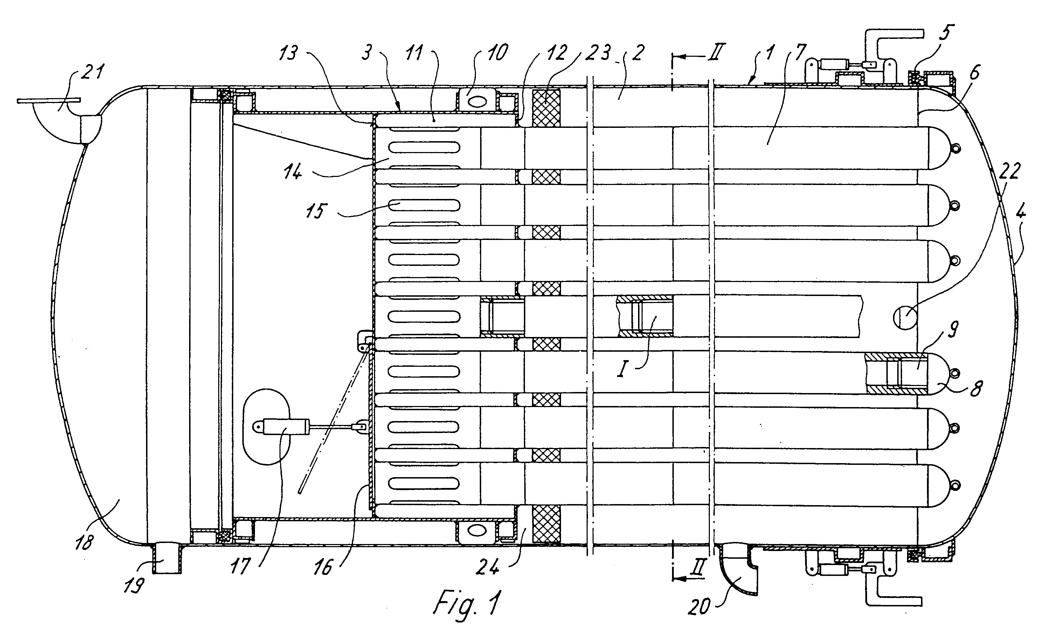

Die Filterkerzen 7 sind rohrförmig ausgebildet, mit radial verlaufenden, nicht dargestellten Filteröffnungen versehen und werden vorzugsweise aus einem rostbeständigen Stahl gefertigt. Die Filterkerzen 7 weisen über ihre gesamte Länge einen konstanten Außendurchmesser auf und werden bei einer großen Länge der Aufnahmekammer aus mehreren Abschnitten zusammengesetzt, wobei die Teilkörper, wie in der Fig. 1 im Bereich I dargestellt, miteinander verschraubt werden können.

Am freien Ende weisen die Filterkerzen einen Stopfen 8 auf, der mit seinem Gewindeschaft 9 in ein Innengewinde des Filterkerzenendes eingeschraubt wird.

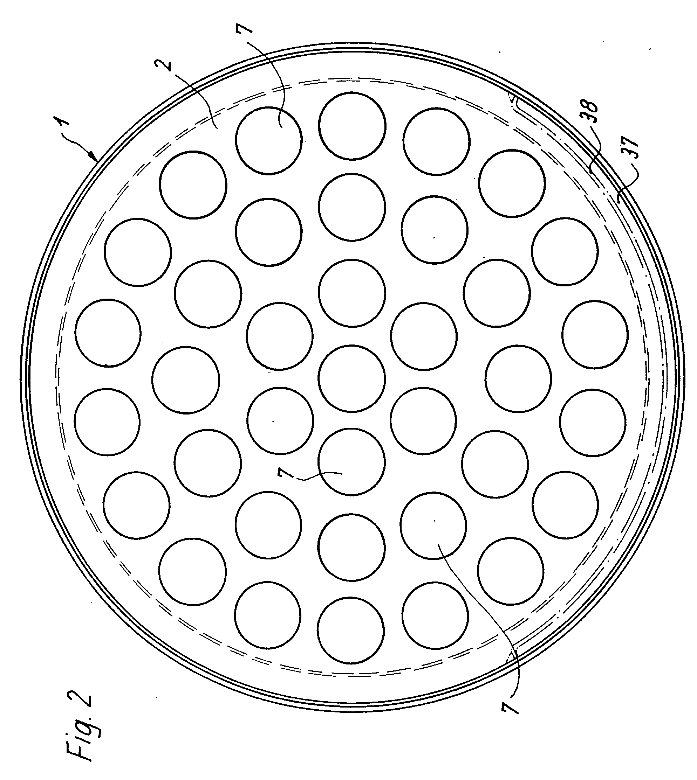

Bei den Ausführungsbeispielen nach den Fig. 1 bis 5 ist der Entleerungskolben 3 mit einer aufblasbaren Dichtung 10 ausgerüstet und weist eine Zwischenkammer 11 für das Filtrat auf, die durch eine vordere Stirnwand 12 und eine hintere Stirnwand 13 des Entleerungskolbens begrenzt wird. Die Enden 14 der Filterkerzen 7, die mit der Stirnwand 13 verschweißt sind, sind mit Ausströmschlitzen 15 für das von den Filterkerzen aufgenommen Filtrat ausgerüstet, das durch die Ausströmschlitze in die Zwischenkammer 11 fließt. In der hinteren Stirnwand 13 der Zwischenkammer ist eine Öffnung angeordnet, die durch eine Klappe 16 verschließbar ist. Die Klappe 16 wird über eine Kolben-Zylinder-Einheit 17 betätigt. Die Zwischenkammer 11 ist über die genannte Öffnung mit einer Sammelkammer 18 verbunden, von der aus das Filtrat über einen Ablauf 19 abgezogen werden kann.

Konditionierter Dünnschlamm wird über einen Anschlußstutzen 20 mittels einer Druckerhöhungspumpe, z. B. einer Exzenterschneckenpumpe, der Aufnahmekammer 2 zugeführt. Unter dem Einfluß des Druckes in der Aufnahmekammer 2 wird aus dem Dünnschlamm ein Filtrat durch die geringen Spaltweiten der Filterkerzen 7 in den Innenraum der Filterkerzen gepreßt. Dieses Filtrat besteht im wesentlichen aus Wasser. Während der Schlammkuchen in der Aufnahmekammer 2 verbleibt, fließt das Filtrat durch die Filterkerzen in die Zwischenkamme 11 und bei geöffneter Klappe 16 in die Sammelkammer 18. Über den Ablauf 19 fließt das Filtrat ins Freie.

Die Vielzahl der Filterkerzen 7 und die im Bodenbereich der Aufnahmekammer angeordnete Filterschicht bildet eine große Gesamtfilterfläche, mit der eine intensive Entwässerung des geflockten Dünnschlammes erreicht wird. Der in der Aufnahmekammer 2 verbleibende, stichfeste Schlammkuchen muß beseitigt werden.

Beim Ausführungsbeispiel nach den Fig. 1 bis 4 erfolgt die Entleerung der Aufnahmekammer 2 von dem Schlammkuchen durch Öffnung des Deckels 4 und durch Betätigung des Entleerungskolbens. Die hintere Kolbenfläche wird mit einem Druckmittel beaufschlagt, das über einen Anschlußstutzen 21 zugeführt wird, so daß sich der Kolben 3 in die vordere Endstellung bewegt, die in der Fig. 3 dargestellt ist. Mechanische Anschläge 22 verhindern einen Austritt des Entleerungskolbens aus dem Druckbehälter 1. Sobald der Entleerungskolben die Anschläge 22 erreicht hat, wird ein Überströmrohr im Scheitel des Druckbehälters freigegeben, wodurch sich die auf die hintere Stirnfläche des Entleerungskolbens als Antriebsmedium wirkende Druckluft selbsttätig entspannt.

Damit der zwischen der Filterkerzen 7 vorhandene Schlammkuchen beseitigt werden kann, ist eine Abstreiferscheibe 23 vorgesehen, die sich über den gesamten lichten Querschnitt des Druckbehälters 1 erstreckt, an der Innenfläche der Aufnahmekammer 2 geführt ist und Durchsteckkanäle für die Filterkerzen 7 aufweist. Die Abstreiferscheibe 23 ist auf den Filterkerzen 7 in einem Preß-Schiebesitz angeordnet, so daß sie in der in der Fig. 1 aufgezeigten Betriebsstellung kraftschlüssig mit den Filterkerzen verbunden ist und mit dem Entleerungskolben einen Ringraum 24 begrenzt. Dieser Ringraum 24 bleibt während der Bewegung des Entleerungskolbens aus der hinteren Endstellung in die vordere Endstellung (Fig. 3) bestehen.

In der vorderen Endstellung des Entleerungskolbens 3 werden Widerlager für die hintere Stirnfläche der Abstreiferscheibe 23 in den Ringraum 24 eingeführt. Diese Widerlager sind als Kipphebel 25 ausgebildet, die jeweils um eine Achse 26 verschwenkbar am Außenmantel des Druckbehälters 1 gelagert sind. Jedem Kipphebel ist als Antriebsaggregat eine pneumatisch betätigbare Kolben-Zylinder-Einheit 27 zugeordnet. Sie kann auch hydraulisch betätigbar sein.

Um den Schlammkuchen von den Filterkerzen abzustreifen, wird die hintere Stirnfläche des Entleerungskolbens 3 einem Unterdruck ausgesetzt, so daß sich der Entleerungskolbens in Richtung des Pfeiles 28 bewegt. Die Abstreiferscheibe 23 stützt sich an den Winkelhebeln 25 ab, so daß sie die Bewegung des Entleerungskolben nicht mitmacht und den Schlammkuchen von den Filterkerzen abschält. Kurz bevor der Entleerungskolben 3 seine hintere Endstellung erreicht hat, werden die Kipphebel 25 betätigt und aus dem Bereich der Abstreiferscheibe 23 bewegt. Bei einer Fortsetzung der Bewegung des Entleerungskolbens in Richtung des Pfeiles 28 wird die Abstreiferscheibe 23, die kraftschlüssig an den Filterkerzen 7 anliegt, zusammen mit den Filterkerzen 7 in das Innere des Druckbehälters bewegt, bis die Kipphebel 25 durch eine erneute Schwenkbewegung die vordere Stirnfläche der Abstreiferscheibe hintergreifen können. Eine solche Betriebsstellung ist in der Fig. 4 aufgezeigt. Damit die Filterscheibe wieder die Lage benachbart dem Entleerungskolben 3 einnimmt, die in der Fig. 1 aufgezeigt ist, wird nun der Entleerungskolben an der hinteren Stirnseite wieder mit Druckluft beaufschlagt und in Richtung des Pfeiles 29 bewegt. Sobald die vordere Stirnfläche des Entleerungskolbens an die Abstreiferscheibe 23 so weit herangefahren ist, daß sie mit der Abstreiferscheibe wieder den Ringraum 24 bildet, wird der Kolben in die hintere Endstellung zurückgefahren und nimmt die in der Fig. 1 aufgezeigte Lage ein. Die Kipphebel werden in die Position zurückgeschwenkt, die in der Fig. 1 aufgezeigt ist. Der Deckel 4 kann in die Verschlußstellung geschwenkt werden.

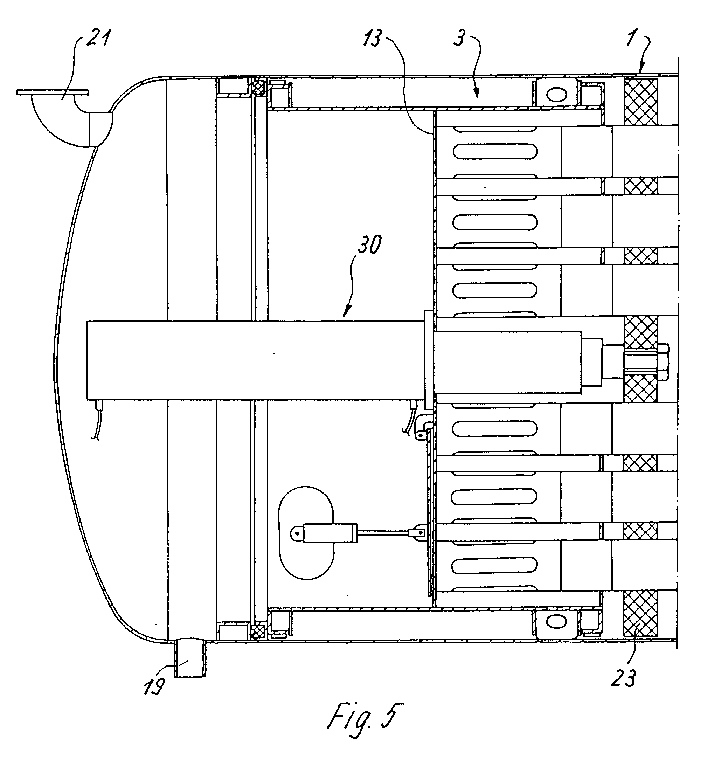

Bei dem Ausführungsbeispiel nach der Fig. 5 erfolgt der Antrieb der Abstreiferscheibe 23 über eine Kolben-Zylinder-Einheit 30, die an dem Entleerungskolben 3, und zwar an der hinteren Stirnwand 13 befestigt ist. Nachdem der Entleerungskolben im Anschluß an die Druckentwässerung den Entleerungshub ausgeführt hat und die vordere Endstellung einnimmt, wird mittels der Kolben-Zylinder-Einheit 30 die Abstreiferscheibe 23 gegenüber den Filterkerzen hin- und herbewegt, bis der Schlammkuchen sich vollständig von den Filterkerzen getrennt hat.

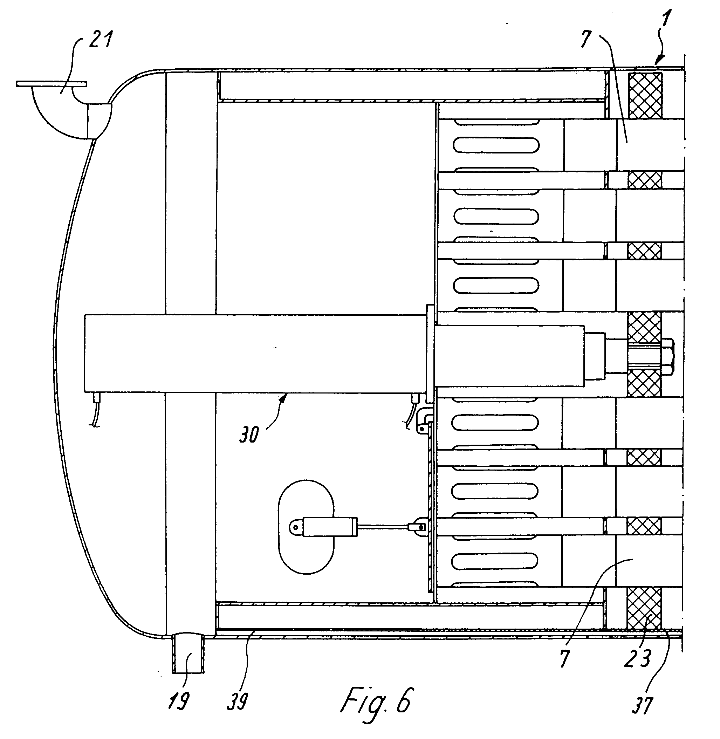

In dem Ausführungsbeispiel nach der Fig. 6 wird auf einen in dem Druckbehälter hin- und herbewegbaren Entleerungskolben verzichtet. Bei dieser Ausführung verbleiben die Filterkerzen 7 im Druckbehälter. Zum Ausschieben des Schlammkuchens aus dem Druckbehälter nach der Druckentwässerung wird nach dem Öffnen des die Entleerungsöffnung verschließenden Deckels die Abstreiferscheibe 23 mittels der Kolben-Zylinder-Einheit 30 betätigt und längs der Filterkerzen 7 verfahren.

Die Abstreiferscheibe kann aus Metall oder aus Kunststoff gefertigt werden.

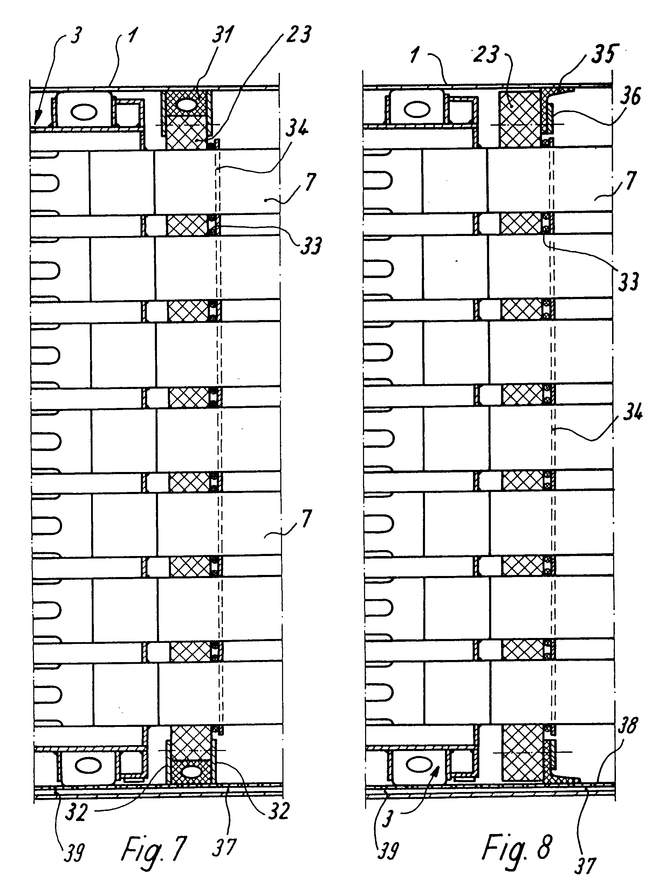

Wie in den Fig. 7 und 8 dargestellt, kann die Ausführungsform nach den Fig. 1 bis 4 dadurch abgewandelt werden, daß zwischen der Abstreiferscheibe 23 und der Innenfläche des Druckbehälters 1 sowie zwischen der Abstreiferscheibe und den Filterkerzen 7 Dichtungen vorgesehen und an der Abstreiferscheibe festgelegt werden, die an der Innenfläche des Druckbehälters sowie auf der Oberfläche der Filterkerzen 7 gleitbar gelagert sind.

Bei dem Ausführungsbeispiel nach der Fig. 7 ist die Abstreiferscheibe 23 mit einem sie umschließenden, aufblasbaren Dichtungsring 31 ausgerüstet. Der Dichtungsring 31 ist in einer Umfangsnut angeordnet, die seitlich durch Ringstege 32 begrenzt wird, die durch nicht dargestellte Schrauben an der Abstreiferscheibe 23 festgelegt sind.

Zur flüssigkeitsdichten Abdichtung der Abstreiferscheibe 23 gegenüber der jeweiligen Oberfläche einer Filterkerze 7 sind die Filterkerze umgreifende O-Ringe 33 vorgesehen, die über ein mit der Abstreiferscheibe 23 verschraubtes Blech 34 gegenüber der Abstreiferscheibe festgelegt werden.

Die Abstreiferscheibe 23 nach der Fig. 8 ist mit einer Lippendichtung 35 ausgerüstet, deren Dichtlippe sich an der Innenfläche des Druckbehälters 1 abstützt. Der vertikale Schenkel dieser Lippendichtung wird mittels eines Klemmringes 36 mit der Abstreiferscheibe 23 verschraubt. Auch bei dieser Ausführungsform sind den jeweiligen Filterkerzen O-Ringe 33 zugeordnet, die an der Oberfläche der jeweiligen Filterkerze gleitbar gelagert und mittels einer Blechscheibe 34 an der Abstreiferscheibe festgelegt sind.

Auch bei den in den Fig. 7 und 8 aufgezeigten Ausführungsbeispielen wird die Abstreiferscheibe 23 bei geöffnetem Deckel mit dem Entleerungskolben 3 und den Filterkerzen 7 in Längsrichtung des Druckbehälters bis in die Nähe der Entleerungsöffnung bewegt. Hierbei wird der Schlammkuchen durch die Entleerungsöffnung ausgeschoben. Die Abstreiferscheibe wird dann fixiert, damit der Entleerungskolben zusammen mit den Filterkerzen in die Ausgangsstellung zurückfahren kann. Zum Rücktransport der Abstreiferscheibe wird ihre Arretierung gelöst, der Deckel geschlossen und durch einen im Bereich des Deckels vorgesehenen Anschlußstutzen Dünnschlamm in den Behälter gepumpt. Da das Wasser des Dünnschlamms durch die Filterkerzen und die im Bodenbereich der Aufnahmekammer angeordnete Filterschicht entweichen kann, sorgen in erster Linie die in die Aufnahmekammer 2 eingefüllten Feststoffe für den notwendigen Druck, um die Abstreiferscheibe bis in die Nähe des Entleerungskolbens 3 zu bewegen. Die eingefahrene Endstellung der Abstreiferscheibe ist in den Fig. 7 und 8 aufgezeigt.

Durch diese Anordnung und Ausbildung der Abstreiferscheibe wird das nochmalige Herausfahren des Entleerungskolbens mit den Filterkerzen zur Mitnahme der Abstreiferscheibe in die Ausgangsposition entbehrlich.

Die Aufnahmekammer 2 für den wässrigen Schlamm ist im Bodenbereich mit einer Ablaufkammer 37 für das im Bodenbereich sich ansammelnde Restwasser ausgerüstet. Diese Ablaufkammer wird durch eine Filterschicht 38 gegenüber der Aufnahmekammer begrenzt, so daß das Restwasser gefiltert in die Ablaufkamer 37 gelangt. Durch einen Kanal 39 fließt das Wasser aus der Ablaufkammer 37 zum Ablauf 19 hin.

Die Filterschicht 38 kann als mit Filteröffnungen ausgestattetes Blech ausgebildet sein, das an seinen oberen Rändern mit der Wandung der Ablaufkammer 2 verschweist ist, und die sich gemeinsam mit der Ablaufkammer 37 nahezu bis in die Nähe des Ablaufs 19 erstrecken kann.

## Patentansprüche

1. Vorrichtung zur Druckentwässerung von wässrigen Schlämmen bestehend aus einem zylindrischen Druckbehälter (1) mit einer Aufnahmekammer (2) für den Schlamm, die an einem Stirnende durch einen die Entleerungsöffnung verschließenden Deckel (4) begrenzt ist und in der sich in horizontaler Längsrichtung erstreckende, über den Querschnitt verteilte, nach der Druckentwässerung in der Aufnahmekammer (2) verbleibende oder mittels eines Entleerungskolbens (3) aus der Aufnahmekammer bewegbare Filterkerzen (7) angeordnet sind und die an ihrer anderen Stirnseite über eine Sammelkammer (18) und einen Ablauf (19) für das Filtrat verfügt, wobei in der Aufnahmekammer (2) eine sich über ihren gesamten lichten Querschnitt erstreckende, an der Innenfläche der Aufnahmekammer geführte, mit Durchsteckkanälen für die Filterkerzen (7) ausgerüstete Abstreiferscheibe (23) vorgesehen und die Abstreiferscheibe (23) mit einem Schiebesitz auf den über die gesamte Länge einen konstanten Außendurchmesser aufweisenden Filterkerzen (7) beweglich gelagert ist und die Abstreiferscheibe mit an ihrer Oberfläche festgelegten, an der Oberfläche der Filterkerzen (7) anliegenden Dichtungen versehen ist, **dadurch gekennzeichnet,** daß zwischen der Abstreiferscheibe (23) und der Innenfläche des Druckbehälters (1) an der Abstreiferscheibe festgelegte Dichtungen (31,35) vorgesehen sind, sowie eine in, Bodenbereich der Aufnahmekammer (2) angeordnete Filterschicht (38) vorgesehen ist und daß im Bodenbereich der Aufnahmekammer eine zur Aufnahmekammer durch die Filterschicht (38) begrenzte Ablaufkammer (37) für das sich im Bodenbereich ansammelnde Wasser vorgesehen ist.

2. Vorrichtung nach Anspruch 1, dadurch gekennzeichnet, daß die Dichtung zwischen der Abstreiferscheibe (23) und der Innenfläche des Druckbehälters als aufblasbarer Dichtungsring (31) oder als Lippendichtung (35) ausgebildet ist.

3. Vorrichtung nach Anspruch 1, dadurch gekennzeichnet, daß sich die Ablaufkammer (37) und die Filterschicht (38) nahezu bis in die Nähe des Ablaufs (19) erstrecken.

4. Vorrichtung nach Anspruch 1, dadurch gekennzeichnet, daß die Filterschicht (38) als mit Filteröffnungen ausgestattetes Blech ausgebildet ist, das an seinen oberen Rändern mit der Wandung der Ablaufkammer (2) verschweißt ist.

5. Vorrichtung nach Anspruch 1, dadurch gekennzeichnet, daß der Anschlußstutzen zum Zuführen von Dünnschlamm in die Aufnahmekammer (2) am Deckel (4) vorgesehen und die Abstreiferscheibe unter der Wirkung des Dünnschlammdruckes in die hintere Endstellung bewegbar ist.

6. Vorrichtung nach Anspruch 1, bei der die Filterkerzen an einem in der Aufnahmekammer bewegbar gelagerten Entleerungskolben festgelegt sind, dadurch gekennzeichnet, daß die Abstreiferscheibe (23) während der Druckentwässerung benachbart dem Entleerungskolben (3) im Preßschiebesitz gegenüber den Filterkerzen (7) angeordnet ist und mit dem Entleerungskolben einen Ringraum (24) begrenzt, in den in der vorderen, nach dem Entleerungshub eingenommenen Endstellung des Entleerungskolbens (3) am Druckbehälter (1) in der Nähe der Entleerungsöffnung bewegbar gelagerte Widerlager einführbar sind, an denen sich beim Rückhub des Entleerungskolbens (3) die Abstreiferscheibe (23) abstützt, daß kurz vor dem Erreichen der hinteren Endstellung die Widerlager von der hinteren Stirnfläche der Abstreiferscheibe entfernt werden, die kraftschlüssig mit den Filterkerzen (7) verbundene Abstreiferscheibe zusammen mit den Filterkerzen bis zur Einnahme der hinteren Endstellung durch den Entleerungskolben in bezug auf die Aufnahmekammer einwärts bewegt wird, die Widerlager in eine Stellung gefahren werden, in der sie die vordere Stirnfläche der Abstreiferscheibe (23) hintergreifen, und daß der Entleerungskolben (3) in die vordere Endstellung bewegt wird, die Widerlager aus dem Bereich der Abstreiferscheibe entfernt werden und der Entleerungskolben in die hintere Endstellung zurückgefahren wird.

7. Vorrichtung nach Anspruch 6, dadurch gekennzeichnet, daß die Widerlager als um eine Achse (26) verschwenkbar gelagerte Kipphebel (25) ausgebildet sind.

8. Vorrichtung nach Anspruch 7, dadurch gekennzeichnet, daß jedem Kipphebel (25) als Antriebsaggregat eine pneumatisch betätigbare Kolben-Zylinder-Einheit (27) zugeordnet ist.

9. Vorrichtung nach einem der Ansprüche 6 bis 8, dadurch gekennzeichnet, daß eine Zwischenkammer (11) für das Filtrat im Entleerungskolben (3) angeordnet und durch eine vordere und eine hintere Stirnwand (12,13) begrenzt ist und daß sich in die Zwischenkammer die Enden (14) der am Entleerungskolben (3) festgelegten Filterkerzen (7) erstrecken und diese Enden mit Ausströmschlitzen (15) für das von den Filterkerzen aufgenommene Filtrat versehen wird.

10. Vorrichtung nach Anspruch 9, dadurch gekennzeichnet, daß in der hinteren Stirnwand (13) eine durch eine Klappe (16) verschließbare Öffnung angeordnet ist, die die Zwischenkammer mit der Sammelkammer (18) verbindet.

11. Vorrichtung nach Anspruch 1, dadurch gekennzeichnet, daß die Abstreiferscheibe (23) mittels einer Kolben-Zylinder-Einheit (30), die an dem Entleerungskolben (3) oder an einem ortsfesten Teil der Aufnahmekammer befestigt ist, gegenüber den Filterkerzen (7) bewegbar ist.

## Claims

1. Apparatus for pressure dewatering of aqueous sludges comprising a cylindrical pressure vessel (1) having a receiving chamber (2) for the sludge, which receiving chamber is defined at one end by a cover (4) for closing the emptying opening and in which are disposed filter candles (7) which extend in the horizontal longitudinal direction and which are distributed over the cross-section and which remain in the receiving chamber (2) after the pressure dewatering operation or which are movable out of the receiving chamber by means of an emptying piston (3), while at its other end the receiving chamber has a collecting chamber (18) and a drain (19) for the filtrate, wherein provided in the receiving chamber (2) is a scraper disc (23) which extends over the entire internal cross-section of the receiving chamber and which is guided at the inside surface of the receiving chamber and which has through passages for the filter candles (7) and the scraper disc (23) is movably mounted with a sliding fit on the filter candles (7) which are of a constant outside diameter over the entire length and the scraper disc is provided with seals which are fixed to its surface and which bear against the surface of the filter candles (7), characterised in that seals (31, 35) which are fixed to the scraper disc are provided between the scraper disc (23) and the inside surface of the pressure vessel (1) and there is provided a filter layer (38) which is arranged in the bottom region of the receiving chamber (2), and that provided in the bottom region of the receiving chamber is a drain chamber (37) for the water which accumulates in the bottom region, the drain chamber (37) being delimited relative to the receiving chamber by the filter layer (38).

2. Apparatus according to claim 1 characterised in that the seal between the scraper disc (28) and the inside surface of the pressure vessel is in the form of an inflatable sealing ring (31) or a lip seal (35).

3. Apparatus according to claim 1 characterised in that the drain chamber (37) and the filter layer (38) extend almost into the vicinity of the drain (19).

4. Apparatus according to claim 1 characterised in that the filter layer (38) is in the form of metal sheet which is provided with filter openings and which is welded at its upper edges to the wall of the drain chamber (2).

5. Apparatus according to claim 1 characterised in that the connecting member for feeding thin sludge into the receiving chamber (2) is provided on the cover (4) and the scraper disc is movable into the rearward end position under the action of the pressure of the thin sludge.

6. Apparatus according to claim 1 wherein the filter candles are fixed to an emptying piston which is mounted movably in the receiving chamber characterised in that during the pressure dewatering operation the scraper disc (23) is arranged adjacent the emptying piston (3) with a press sliding fit with respect to the filter candles (7) and with the emptying piston defines an annular space (24) into which supports can be introduced when the emptying piston (3) is in the forward end position which it assumes after the emptying stroke movement, which supports are mounted movably on the pressure vessel (1) in the vicinity of the emptying opening and against which the scraper disc (23) bears in the return stroke movement of the emptying piston (3), that just before the rearward end position is reached the supports are moved away from the rear face of the scraper disc, the scraper disc which is forcelockingly connected to the filter candles (7) is moved inwardly in relation to the receiving chamber together with the filter candles until the emptying piston assumes the rearward end position, the supports are moved into a position in which they engage behind the front face of the scraper disc (23), and that the emptying piston (3) is moved into the forward end position, the abutments are removed from the region of the scraper disc and the emptying piston is withdrawn into the rearward end position.

7. Apparatus according to claim 6 characterised in that the supports are in the form of rocking levers (25) mounted pivotably about an axis (26).

8. Apparatus according to claim 7 characterised in that a pneumetically actuable piston-cylinder unit (27) is associated as a drive unit with each rocking lever (25).

9. Apparatus according to one of claims 6 to 8 characterised in that an intermediate chamber (11) for the filtrate is arranged in the emptying piston (3) and is defined by front and rear end walls (12, 13) and that the ends of the filter candles (7) which are fixed to the emptying piston (3) extend into the intermediate chamber and said ends are provided with discharge flow slots (15) for the filtrate accommodated by the filter candles.

10. Apparatus according to claim 9 characterised in that disposed in the rear end wall (13) is an opening which can be closed by a flap (16) and which communicates the intermediate chamber with the collecting chamber (18).

11. Apparatus according to claim 1 characterised in that the scraper disc (23) is movable relative to the filter candles (7) by means of a piston-cylinder unit (30) which is secured to the emptying piston (3) or to a stationary portion of the receiving chamber.

**Revendications**

1. Appareil pour la déshydratation sous pression de boues aqueuses, composé d'un récipient à pression (1) cylindrique avec une chambre de réception (2) pour la boue, délimitée à une extrémité frontale par un couvercle (4) qui obture l'ouverture de vidage et dans laquelle sont disposés des bougies de filtrage (7), s'étendant en direction longitudinale horizontale, réparties sur la section transversale, demeurant dans la chambre de réception (2) une fois effectuée la déshydratation sous pression, ou déplaçables hors de la chambre de réception au moyen d'un piston de vidage (3), bougies de filtrage (7) disposant à leur autre face frontale d'une chambre de collecte (18) et d'un écoulement (19) pour le filtrat, un disque racleur (23) s'étendant sur toute la section transversale libre de la chambre, guidé sur la surface intérieure de la chambre de réception, équipé de canaux de passage pour les bougies de filtrage (7), étant prévu dans la chambre de réception (2) et monté mobile avec un siège coulissant sur les bougies de filtrage (7) qui présentent un diamètre extérieur constant sur toute leur longueur, le disque racleur étant pourvu de joints d'étanchéité, fixés sur sa surface et appuyant sur la surface des bougies de filtrage (7), caractérisé en ce que des joints d'étanchéité (31,35) fixés sur le disque racleur sont prévus entre ce dernier et la surface intérieure du récipient à pression (1), ainsi qu'une couche de filtrage (38) disposée dans la zone de fond de la chambre de réception (2) et en ce que, dans la zone de fond de la chambre de réception est prévue une chambre d'évacuation (37), délimitée par rapport à la chambre de réception grâce à la couche de filtrage (38), pour l'eau qui s'accumule dans la zone de fond.

2. Appareil selon la revendication 1, caractérisé en ce que le joint d'étanchéité situé entre le disque racleur (23) et la surface intérieure du récipient à pression est réalisé sous forme de bague d'étanchéité gonflable (31) ou de joint d'étanchéité à lèvre (35).

3. Appareil selon la revendication 1, caractérisé en ce que la chambre d'évacuation (37) et la couche de filtrage (38) s'étendent à peu près jusqu'à proximité de l'évacuation (19).

4. Appareil selon la revendication 1, caractérisé en ce que la couche de filtrage (38) est réalisée sous forme de tôle dotée d'ouvertures de filtrage, soudée sur ses bords supérieurs à la paroi de la chambre d'évacuation (2).

5. Appareil selon la revendication 1, caractérisé en ce que la tubulure de raccordement servant à l'amenée de boue fluide dans la chambre de réception (2) est prévue sur le couvercle (4) et le disque racleur est déplaçable en position finale arrière sous l'effet de la pression de la boue fluide.

6. Appareil selon la revendication 1, dans lequel les bougies de filtrage sont fixées sur un piston de vidage monté déplaçable dans la chambre de réception, caractérisé en ce que, pendant la déshydratation sous pression, le disque racleur (23) est voisin du piston de vidage (3) dans le siège coulissant à pression, par rapport aux bougies de filtrage (7) et délimite, avec le piston de vidage, un espace annulaire (24) dans lequel, dans la position finale avant, prise par le piston de vidage (3) sur le récipient à pression après avoir effectué la course de vidage, on peut introduire, à proximité de l'ouverture de vidage, des butées montées déplaçables, sur lesquelles le disque racleur (23) prend appui lors de la course de retour du piston de vidage (3), en ce que, peu avant d'atteindre la position finale arrière, les butées sont enlevées de la surface frontale arrière du disque racleur, le disque racleur relié mécaniquement aux bougies de filtrage (7) étant déplacé, conjointement avec les bougies de filtrage, jusqu'à prendre la position finale arrière, le déplacement étant effectué au moyen du piston de vidage, en pénétrant dans la chambre de réception, les butées étant déplacées dans une position dans laquelle elles saisissent par l'arrière la surface frontale avant du disque racleur (23), et en ce que le piston de vidage (3) est déplacé à la position finale avant, les butées étant éloignées de la zone du disque racleur et le piston de vidage étant ramené à la position finale arrière.

7. Appareil selon la revendication 6, caractérisé en ce que les butées sont réalisées sous forme de leviers basculants (25) montés à pivotement autour d'un axe (26).

8. Appareil selon la revendication 7, caractérisé en ce qu'un ensemble à piston et cylindre (27) actionnable pneumatiquement et servant de groupe d'entraînement est associé à chaque levier basculant (25).

9. Appareil selon l'une des revendications 6 à 8, caractérisé en ce qu'une chambre intermédiaire (11) pour le filtrat est disposée dans le piston de vidage (3) et délimitée par une paroi frontale avant et une paroi frontale arrière (12,13) et en ce que les extrémités (14) des bougies de filtrage (7) fixées sur le piston de vidage (3) s'étendent dans la chambre intermédiaire, ces extrémités étant pourvues de fentes de sortie d'écoulement (15) pour le filtrat capté par les bougies de filtrage.

10. Appareil selon la revendication 9, caractérisé en ce qu'une ouverture, reliant la chambre intermédiaire à la chambre de collecte (18) et obturable par un volet (16), est disposée dans la paroi frontale arrière (13).

11. Appareil selon la revendication 1, caractérisé en ce que le disque racleur (23) est déplaçable par rapport aux bougies de filtrage (7), au moyen d'un ensemble à piston et cylindre (30) fixé sur le piston de vidage (3) ou sur une partie localement fixe de la chambre de réception.

Fig. 1

Fig. 2

EP 0 269 813 B1

*Fig. 3*

*Fig.4*

Fig. 5

Fig. 6

Fig. 7

Fig. 8